Europäisches Patentamt

European Patent Office

Office européen des brevets

(19)

(11) Publication number : **0 567 383 A2**

(12) **EUROPEAN PATENT APPLICATION**

(21) Application number : **93401006.7**

(22) Date of filing : **19.04.93**

(51) Int. Cl.$^5$ : **B32B 15/08, B65D 90/04**

(30) Priority : **21.04.92 US 871664**

(43) Date of publication of application :
**27.10.93 Bulletin 93/43**

(84) Designated Contracting States :
**DE FR GB**

(71) Applicant : **CHEMFAB CORPORATION**
**Daniel Webster Highway P.O. Box 1137**
**Merrimack New Hampshire 03054 (US)**

(72) Inventor : **Koerber, Keith G.**
**39 High Street**
**Goffstown, New Hampshire 03045 (US)**

Inventor : **McMartin, James M.**
**1 Brandywine Drive**
**Hooksett, New Hampshire 03106 (US)**
Inventor : **Drobny, George J.**
**11 Quails Way**
**Merrimack, New Hampshire 03054 (US)**
Inventor : **Perin III, Donald W.**
**2A, 27 Maple Avenue**
**Goffstown, New Hampshire 03045 (US)**
Inventor : **Lupton, Elmer C., Jr.**
**P.O. Box 10415**
**Bedford, New Hampshire 03110 (US)**

(74) Representative : **Des Termes, Monique et al**
**c/o Société de Protection des Inventions 25,**
**rue de Ponthieu**
**F-75008 Paris (FR)**

(54) **Fluid storage tanks and liners.**

(57)    A fluid storage system comprising a shell 42, and including a flexible, seamed liner 40 located within the shell. The liner is made oversized relative to the shell so as to reduce stress or tension on the liner seams. Particularly useful as liner materials are gas-tight metallic foils laminated to at least one fluoropolymer clad polyimide film.

FIG.5A

EP 0 567 383 A2

## Background of the Invention

### Field of the Invention

The present invention relates to improvements in fluid storage tanks, and in particular to improvements in flexible liner systems for fluid storage tanks. The invention has particular utility in connection with fuel storage tanks for motor vehicles, and will be described in connection with such utility, although other utilities are contemplated.

Liquid fuels for internal combustion engines and for heating typically comprise refined hydrocarbons. Such materials are highly energetic and flammable, but they can cause severe environmental damage if released or spilled. Such materials can range in viscosity from 10 centipoise to 1,000 centipoise, and generally comprise a blend of carbon chain compounds with molecular weights as low as 54, and selected additives such as tetraethyl lead, phosphorus compounds, volatile alcohols, and ethers, which additives may be present in quantities ranging from trace, catalytic amounts, up to 30 wt percent or more of the fuel. Alcohols also are used as primary components of liquid fuels and are being considered for more extensive use.

The widespread use of volatile liquid fuels creates large requirements for containment and storage. These requirements range from extremely large multi-million gallon storage tanks as may be employed in a refinery or distillery, to intermediate volume storage tanks (10,000-50,000 gal) as may be employed in retail gasoline stations, to smaller volume tanks (250-1000 gal) as may be employed, for example, in single family residences, to small volume tanks (1-100 gal) as may be employed in motor vehicles, and farm and garden implements. These tanks typically have been formed of steel or plastic, such as glass fiber reinforced polyester, polyethylene or nylon.

Metal tanks and plastic tanks each have their advantages and disadvantages. Metal tanks are relatively strong, are inert to attack by hydrocarbons, and are able to dissipate static electrical charges. Metal tanks also are relatively inexpensive and have excellent containment properties and permeability resistance. However, metallic tanks can be subject to attack by contained liquids, or in the case of underground tanks, by soil components, which may cause rust or corrosion which may lead to microscopic or to large scale failure of the tank wall. Corrosion resistant metals are available, but are heavy and expensive. Metal tanks are relatively heavy which is a disadvantage for tankage in vehicles or other on-board applications.

Plastic tanks are lightweight and can be fabricated by a number of techniques including blow molding, rotational molding and injection molding. Plastics have good strength, and individual plastics can be selected which have excellent compatibility with individual fuel components, for example, nylon for hydrocarbons, and polyethylene for alcohols. However, the diversity of fuels now being used and/or contemplated makes it difficult if not impossible to use one single plastic material without risking attack by some fuel component. Also, even though the plastic may exhibit mechanical compatibility with its fuel contents, there can be a high rate of transport of fuel molecules through the wall of the plastic.

The art has proposed several techniques for improving the resistance to permeability of plastic fuel tanks such as surface fluorination of polyethylene, surface sulfonation of polyethylene, alloying of polyolefins with barrier materials such as nylon, addition of mineral platelets such as mica and coextrusion or co-blow molding with packaging resins. These approaches all show significant reduction of the permeability to some fuel components. However, they only reduce the rate of permeation and do not improve the chemical resistance of the base resin to the contained liquid. Moreover, there are questions concerning the ability of these materials to deter permeation of some chemical components now being considered for fuels. And there are questions concerning the long term effectiveness of surface treatments in impeding permeation.

The art also has proposed several techniques for improving the integrity of fuel storage tanks. For example, it is now a common practice to fit new metal or plastic tanks or to retrofit existing metal or plastic tanks with a secondary containment means, e.g. by means of a double walled tank or a separate containment vessel surrounding the tank. Alternatively, the tank may be provided with a liner or bladder made of a flexible plastic or elastomer.

Another problem with fuel tanks is repetitive venting of vapors to the atmosphere each time the tank is refilled. In a conventional fuel tank, the space above the liquid fuel becomes saturated with fuel vapors. Thus, when the tank is refilled, the saturated vapors become displaced from the tank, and unless captured in a vapor recovery system, are released to the atmosphere. Various systems have been developed for vapor recovery, but are cumbersome, and at times heavy as well as expensive, and may require frequent service. The problem of venting of vapors to the atmosphere is particularly acute in the case of relatively small volume fuel storage tanks as are employed on motor vehicles, farm and garden implements, and the like which require frequent filling. As an alternative to conventional vapor recovery systems, it has been proposed to eliminate the free vapor space by providing a conventional rigid fuel tank with a flexible liner or bladder which contains the liquid, but which is sufficiently flexible and conformable to the shape of the liquid that there is little or no vapor or overhead space inside the bladder. The liner or bladder is fitted inside the rigid, liquid-tight tank, and supported by the tank.

By choosing a liner or bladder which has sufficient permeation resistance to molecules of the contained liquid, permeation and evaporation of fuel into overhead space in the rigid tank can be prevented, since the liner which contains the liquid fuel conforms to the shape or volume of the contained liquid. While an overhead space in the rigid tank still would exist, and grow as the fuel is consumed, the liner prevents fuel vapors from migrating into and filling the overhead space. Thus, the overhead space would contain virtually no permeating fuel molecules, and would consist almost entirely of ambient air. When the tank is filled, the liquid enters directly into the liner which then expands to conform to the rigid tank. And, only air is displaced from the overhead space of the rigid tank. Thus, there would be no venting of fuel vapors to the atmosphere.

Over the road tank haulers have also employed flexible tank liners to increase profitability. For example, one tank hauler reportedly has outfitted its tankers with two flexible liners, one liner designed for use when hauling lubricating oils in one direction, and the other liner designed for use in hauling orange juice in the other direction.

Currently commercially available flexible tank liner or bladder materials exhibit relatively high permeability, particularly to lighter hydrocarbons such as highly refined gasoline, and gasoline additives such as alcohols. Moreover, currently available flexible tank liner or bladder materials and liners or bladders made therefrom have limited burst strengths, and can be particularly weak at fabricated seams. This presents a problem since motor vehicle fuel tanks may be subjected to extreme mechanical stress when liquid fuels rebound as a result of rapid deceleration or particularly in the event of a collision. Moreover, since a rigid fuel tank shell also may be damaged in a collision, failure of a tank liner may result in catastrophic loss of the fuel contents, thus damaging the environment and increasing the possibility of fire or explosion.

A tank liner or bladder must maintain both flexibility and mechanical integrity and strength over the design life of the tank in which it is installed, and must provide the necessary barrier and chemical compatibility properties. A tank liner also must have sufficient thermal capabilities to survive manufacturing conditions, and in-use conditions without loss of barrier properties or mechanical strength. For example, in the case of a motor vehicle fuel tank, it is not uncommon in extreme northern areas for ambient temperatures to reach 50-60°F or more below zero, while ambient temperatures in some desert regions of the world may reach 130°F or more above zero. Moreover, even in temperate climate zones, the temperature under a motor vehicle may reach 200°F or more in the vicinity of the fuel tank.

It is therefore an object of the present invention to provide a liquid fuel tank storage system which overcomes the aforesaid and other disadvantages of the prior art. Another object of the present invention is to provide a liquid fuel liner material and manner of design and construction which is particularly suited for use in storage of liquid hydrocarbon fuels or the like, and is characterized by mechanical integrity and strength, and the ability to resist both permeation and deleterious effects of liquid hydrocarbon fuels and fuel additives, alcohols, ethers and the like.

## Summary of the Invention

We have found in accordance with one aspect of the present invention that certain of the fluoropolymer clad polyimide film products disclosed in our co-pending U.S. Application Serial No. 07/717,855 advantageously may be employed as a flexible liner or barrier material in a fuel tank or the like. In yet another and preferred embodiment of the present invention, at least one gas-tight metallic foil may be sandwiched between and laminated to the fluoropolymer clad polyimide films or other polymer films.

Yet another aspect of the present invention provides a method of preparing a multilayer composite which comprises thermally welding together one or more fluoropolymer clad polyimide films and one or more metallic foils. The invention in yet another aspect provides a unique seam or splice which combines the characteristics and advantages of a peel seam, but retains the ultimate tensile and breaking strength of a shear seam. Finally, yet another aspect of the invention provides a storage tank assembly including an outer rigid tank shell, and an oversized flexible liner or bladder which is designed to protect against bursting.

## Brief Description of the Drawings

Yet other features and advantages of the present invention will become clear from the following detailed description taken into conjunction with the enclosed drawings wherein like numerals depict like parts, and wherein:

FIG. 1 is a side view, in cross section, of a preferred laminate product made in accordance with the present invention;

FIG. 2 is a schematic view showing production of a laminate product in accordance with the present invention;

FIG. 3 is a side view, in cross section, showing a storage tank and liner made in accordance with the present invention;

FIG. 4 is a side view, in cross section, showing details of the inlet portion of the storage tank shown in FIG. 3;

FIGS. 5A-5C are side views, in cross section, illustrating effective rapid deceleration;

FIG. 6 is a side view, in cross section, showing the shear seam;

FIG. 7 is a side view, in cross section, illustrating a peel seam;

FIG. 8 is a side view, in cross section, showing a peel/shear seam made in accordance with the present invention;

FIG. 9 is a side view, in cross section, illustrating a peel/shear seam of FIG. 8, under pressure; and

FIG. 10 is a side view, in cross section, illustrating another embodiment of the invention.

## Detailed Description of the Invention

We have found that the fluoropolymer clad polyimide film products disclosed in our co-pending U.S. application Serial No. 07/717,855 advantageously may be employed as flexible liners or bladder barrier materials in a fuel tank. More specifically, as taught in our aforesaid copending U.S. application Serial No. 07/717,855, which is incorporated herein by reference, a multi-layer film is made by combining a layer of polyimide and one or more layers of a thermally weldable fluoropolymer film or films selected from a group consisting of PTFE (polytetrafluoroethylene, a homopolymer of tetrafluoroethylene (TFE monomer), thermally compatible TFE copolymers and any combination or blend thereof. The term TFE copolymers as used herein includes copolymers of TFE with other ethylenically unsaturated monomers, such as HFP (hexafluoropropylene) and known as FEP (fluorinated ethylene propylene); or with ethylene and known as ETFE; or with propylene and known as "Aflas"; or with perfluoroalkyl vinyl ethers such as perfluoromethyl vinyl ether (MFA) or perfluoropropyl vinyl ether (PFA). The fluoropolymer layer or layers also may be selected from the group consisting of $PVF_2$ (polyvinylidene fluoride or PVDF, (a homopolymer of vinylidene fluoride ($VF_2$) monomer), thermally compatible $VF_2$ copolymers (copolymers of vinylidene fluoride ($VF_2$) with other ethylenically unsaturated monomers, such as CTFE (chlorotrifluoroethylene) or HFP) and any blend or combination thereof. The term "copolymer" used herein includes the employment of one or more ethylenically unsaturated comonomers, such as both HFP and $VF_2$ as comonomers with TFE in a polymer (TFE terpolymer).

As taught in our aforesaid co-pending U.S. application Serial No. 07/717,855 the fluoropolymer clad polyimide multi-layer composites are prepared by coating a polyimide-containing film with an adhesive layer comprising a material selected from the group consisting of PTFE, thermally compatible TFE copolymers, and blends thereof; coating the adhesive layer on at least one surface of the polyimide containing film with a fluoropolymer film; applying a second fluoropolymer film to the adhesive layer on at least one surface of the polyimide-containing layer; and thermally welding the layers to form a composite. While PTFE may be employed alone as the adhesive layer material, it is more desirable from a processing point of view to utilize a combination of PTFE and a thermally compatible TFE copolymer to create this bond, since the use of PTFE alone necessitates processing temperatures which at times may lead to degradation of the strength of the polyimide or polyimide/fluoropolymer interface. Thermally compatible TFE copolymers should be used, meaning these copolymers must be co-processable with PTFE so as to provide a fused blend of the polymers with good physical properties. Such processing methods are described in co-pending U.S. Application Serial No. 07/305,748 assigned to the common assignee, and in U.S. Patent No. 4,883,716, both of which are incorporated herein by reference. Particularly useful as polyimide films for use in the present invention are those polyimide films disclosed in U.S. Patent No. 3,616,177, the disclosure of which also is incorporated herein by reference. Kapton[R] H and Kapton[R] HN may be used in the polyimide layer, as well as other polyimide films such as Apical[R] or Upilex[R]. The polyimide film layer typically should have a thickness of about 0.5-2.0 mil, more typically 0.7-1.3 mil.

The PTFE used in the present invention typically should have a relatively high molecular weight, and a melt viscosity of at least $10^{10}$ poise, preferably $10^{10}$-$10^{12}$ poise at 380°C. PTFE for use in the present invention may be derived from aqueous dispersion of such materials as Teflon[R] 30, AD[R] 1, and Fluon 81 and Algoflon[R] 60. The PTFE may be combined with a thermally compatible TFE copolymer, such as FEP and PFA or MFA, to form the adhesive layers of the composite. When FEP is used, it typically should have a melting point of about 268°C and a melt viscosity of in the region of $3X10^4$-$2.5X10^5$ poise at 372°C. FEP may be derived from aqueous dispersion of such materials as Teflon[R] 120, Teflon[R] TE 9503, and Teflon[R] TE 5582.

If PFA is used in the adhesive layers of the invention, it typically should have a melting point of 305°C and a melt viscosity in the region of $3X10^4-2.5X10^3$ poise at 372°C. PFA may be derived from aqueous dispersion of a material such as Teflon$^R$ 322 J. The adhesive layers may be applied by either coating or lamination techniques. Typically the layers are formed by aqueous dispersion coating.

The adhesive layers typically should contain at least 40% by volume PTFE, with the remainder being A TFE copolymer with which it is thermally compatible. A useful composition for the adhesive layers is 50% by volume PTFE and 50% by volume thermally compatible TFE copolymer. The resulting composites are found to be resistant to delamination even at elevated temperatures, and are flexible and strong. These properties, together with excellent resistance to permeation by most hydrocarbon fuels makes the fluoropolymer clad polyimide films of our copending U.S. Application Serial No. 07/717,855 useful as liners or bladders in fuel tanks in accordance with the present invention. However, other commercially available fluoropolymer clad polymer films advantageously may be employed directly, i.e. without further cladding even if the cladding may contain less than 40% PTFE or they may be further clad in accordance with the foregoing. Suitable commercially available fluoropolymer clad films include Apical AF from Applied-Apical Company, particularly Apical AF919, Kapton F available from Dupont Company particularly Kaptan F 919, Upilex C from ICI Americas, particularly Upilex C 25RCB05F, and Chemfilm$^R$ DF 2919 from Chemfab Corporation, particularly Chemfilm D2919-2.0 mil.

In another embodiment of the present invention, a thin metallic foil such as 0.0005 - 0.003 inch (0.00127-0.00762 cm) metal foil such as aluminum, copper, tin, lead or stainless steel or other corrosion resistant steel foil, preferably aluminum or copper, most preferably aluminum, is sandwiched between layers of fluoropolymer clad polyimide films or between layers of other relatively high modulus or "stiff" polymer films such as biaxially oriented condensation polymer film of polyethylene terephthalate and ethylene glycol (PET). PET film is commercially available from a number of sources including Mylar from DuPont and Melinex from ICI Americas. Also, if desired, the PET film may be clad with polyvinylidene chloride, urethanes or other cladding materials. Other films which may be used in place of PET film include biaxially oriented polyamide (nylon), non-fluoropolymer clad polyimide, polyetherimide available as Kemid from the Norton Company, biaxially oriented polyethylene naphthalate (PEN) available from ICI Films, polybenzimidazole (PBO), and polybenzoxazole available from Dow Chemical, and biaxially oriented polyolefins such as polyethylene or polypropylene. Such materials can be clad with polyvinylidene chloride, urethanes or other cladding materials. Such materials also can be clad with polyvinylidene chloride (PVDC), thin glass or may be metallized to improve their barrier properties. Other polymer film materials which advantageously may be employed in accordance with the present invention include polystryene, polyamide, a copolymer of ethylene and vinyl alcohol (EVAL), and polyvinylidene chloride. In such cases adhesives used to bond the layers of plastic materials to the metal foil, may include copolymers of ethylene and vinyl acetate, copolymers of ethylene and maleic anhydride, acrylics, urethanes, acrylic-urethanes and "ionomeric" materials. The polymer film layers may be preformed, or may be formed in situ directly on the metal foil. Alternatively, the plastic film layers may be preformed, and the metal foil formed in situ by depositing the metal on the polymer film.

The laminate consisting of metal foil sandwiched between two PET films is produced by coating the films with a highly chemical resistant adhesive and subsequently laminating them to the metal foil on a hot laminator. The adhesive may be polyester resin based, for example, Adcote 1217, Morton International or Adcote 506-40, Morton International and is crosslinked by isocyanate to improve its chemical resistance and bond strength of the laminate. The isocyanate used in this process can be TDI (for example Catalyst F, Morton International) or MDI (PAPI 2027, Dow Chemical Co.). The ratio resin/isocyanate can be between 100/2 to 100/8 depending on the system. The coating weight of the adhesive mixture should be 3-4 lbs. per 3000 sq. ft. (4.8824-6.5099 grams/sq. meter). The laminated product needs 5-8 days at room temperature to fully cure.

The laminate can be seamed by using the same adhesives as for the lamination, or other suitable adhesive. Typically, the seams are coated, pressed together and the adhesive at least partially cured. For example, for seaming with Adcote, the coated seams are dried and then pressed together at 180°-250°F (82-121°C) (Adcote 506-40) or 275-300°F (135-149°C) (Adcote 1217). The seams are then cooled under pressure and only then removed from the press. Five to eight days at room temperature are required for a full cure of the seams.

As an alternative, PET with a heat sealable surface (e.g. Melinex 301H, ICI Films) may be used. Then the seams are made by standard heat sealing techniques (e.g. bar sealing at 285-295°F (141-146°C), 40 psi, (275.8 dynes/sq. centimeter), 1 sec or by hot air sealer at nozzle temperatures 200-250°C and speeds 3-6 fpm). Other adhesive systems may be employed under their design conditions.

The thickness of the PET films typically should be .00025 inch to .003 inch (0.0006 to 0.0076 cm), more typically .0005 inch to .0012 inch (0.0013 to 0.0030 cm), most typically .0005 inch (0.0013 cm). The thinner the gauge of the film among 0.0005 to 0.002 inch (0.0013 to 0.0051 cm), the better the protection of the film against the formation of pinholes when flexed.

Metal foils are well known for resistance to permeation. Thus, the incorporation of a thin metal film or foil in the laminated product may prevent permeation of certain components of hydrocarbon fuel blends which otherwise might permeate the polymer film layers. The polymer film layers also may protect the metal foil from corrosion or embrittlement by preventing direct liquid contact with many of the fuel components.

However, aluminum or other metal foils sufficiently thinned to be considered flexible (0.0005-0.003 inch) (0.0013 to 0.0076 cm) generally are extremely prone to damage and pin holing upon light flexing, bending or extension. We have found that resistance to pin holing may be substantially improved by laminating the foil between fluoropolymer clad polyimide films in accordance with one embodiment of the present invention. Moreover, resistance to pin holing appears to be achieved notwithstanding repeated flexure and even elongation of the laminated product. While not wishing to be bound by theory, it is believed that the fluoropolymer adhesive creates interstitial bonds between the foil and the polyimide film layers whereby the mechanical demands of flexure and elongation are transferred at least in part to the polyimide film layers which supports and stabilizes the foil layer. Should some pin holes form in the metal foil layer, the fluoropolymer clad polyimide film elements retain sufficient integrity to block or at least retard permeation through any pin holes which may form in the foil layer.

If desired, conductive materials such as carbon particles or metallic particles also may be incorporated into the adhesive layers to render the resultant material static dissipative. Typically, but not necessarily, the conductive materials will be incorporated into the laminated product elements nearest the liquid. Also typically, but not necessarily, the sames will be arranged so that the conductive layers in the liner are continuous allowing a single grounding of the liner to ground the entire liner.

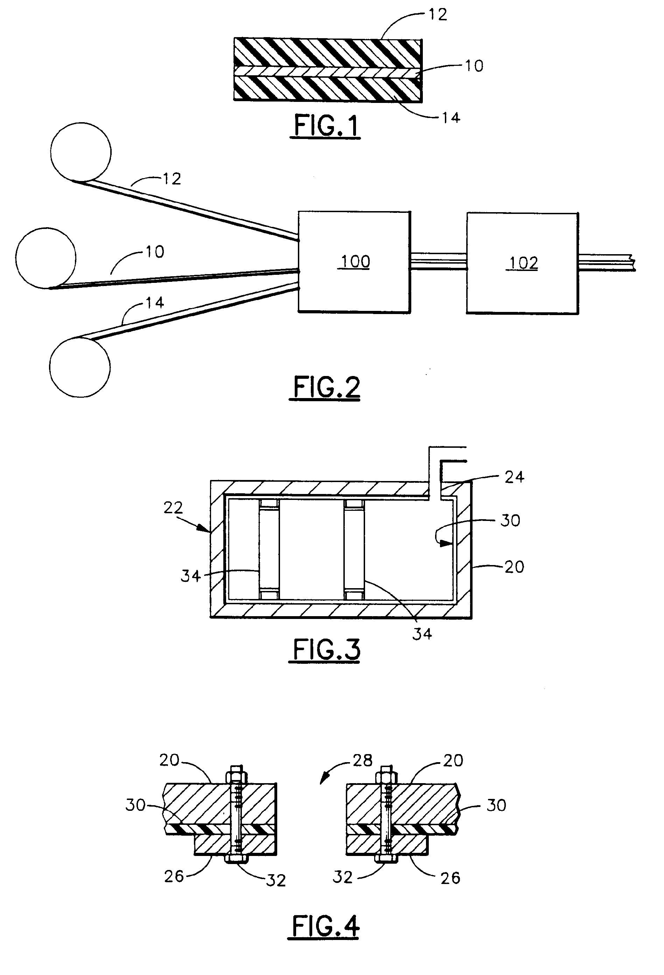

Referring now to FIG. 1 of the drawings, there is illustrated a preferred form of flexible liner laminated film product made in accordance with the present invention. The film, in a preferred embodiment of the invention comprises a 0.0003-0.005 inch (0.0008 to 0.0013 cm) aluminum foil layer 10 sandwiched between and laminated to 0.002 inch (0.0051 cm) fluoropolymer clad polyimide film layers 12 and 14, respectively.

Typically but not necessarily fluoropolymer clad polyimide film layers 12 and 14 comprise the same fluoropolymer clad polyimide materials, and may be the same or different thicknesses, depending on the intended use. Typically aluminum foil layer 10 may be of a thickness in the range of 0.0005-0.003 inch (0.0013 to 0.0076 cm), more typically 0.001-0.0015 inch (0.00254-0.0038 cm), while fluoropolymer clad polyimide film layers 12 and 14 should have thickness of at least 0.0005 inch (0.0013 cm) typically will have a thickness of .0015-.005 inch (0.0038-0.0127 cm), more typically .00125-.003 inch (0.0032-0.0076 cm), most typically .0015-.0025 inch (0.00254-0.0064 cm).

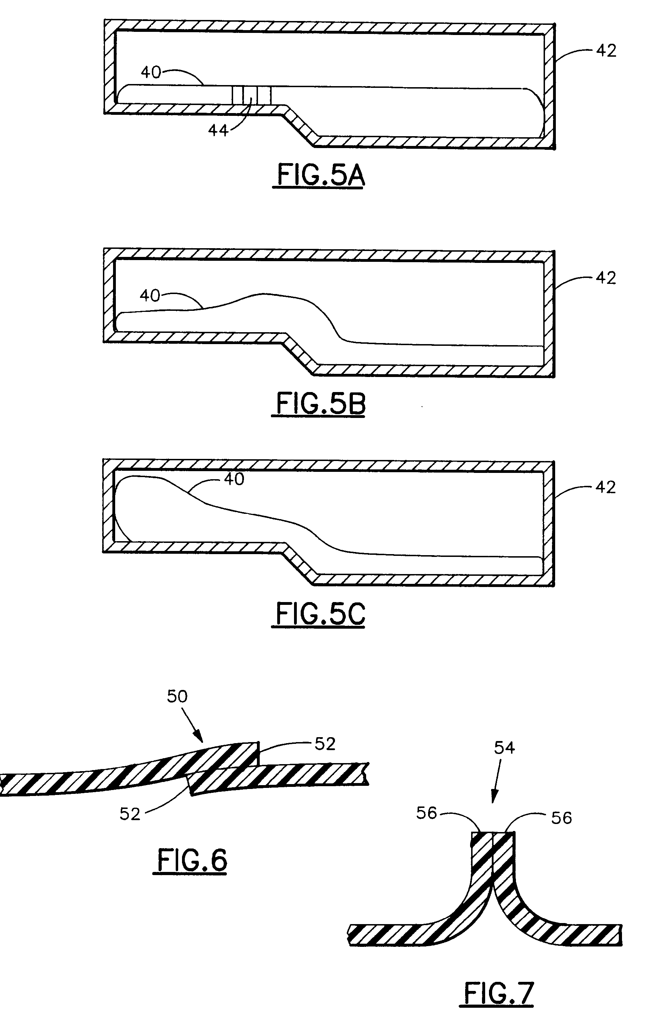

Referring now to FIG. 2, the laminated product is formed as follows:

The aluminum foil layer 10 is first primed with a thin layer 0.0001-0.001 inch (0.000254-0.00254 cm) typically 0.00025-0.0005 inch (0.00065-0.0013 cm) of the fluoropolymer based primer (e.g. FEP alone or a blend of fluoropolymers or the materials described by Effenberger and Keese U.S. Patent 4,770,927, which is incorporated herein by reference, or with a special primer, Product Code 858-150, Dupont, designed to bond PTFE to aluminum). This primer is applied on both sides of the foil in a conventional dip coating tower. An additional fluoropolymer based top coat such as a blend of fluoropolymers or PTFE and fluoroelastomer (i.e. Latex TN -Ausimont) as is described in the aforesaid U.S. Patent 4,730,927 of J.A. Effenberger and F.M. Keese, may be applied in the same fashion to assure a good bond to the adjacent layers.

Polyimide film layers 12 and 14 are coated in a similar way with an aqueous dispersion of a fluoropolymer such as PTFE, PFA, FEP, MFA, or mixtures or blends. The coated layers then are laminated together in a hot laminator with the aluminum foil layer sandwiched between them.

Aluminum foil layer 10, and polyimide film layers 12 and 14, each are initially coated, at a coating station 100 with an aqueous dispersion of a fluoropolymer such as PTFE, PFA, FEP, MFA or mixtures or blends thereof. The coatings are applied in a conventional dip coating tower, and the coated layers are then laminated together with the aluminum foil layer sandwiched between the polyimide film layer in a hot laminator at a laminating station 102.

The resulting multilayer fluoropolymer clad polyimide film product is subjected to Gelbo flex testing using a modified commercially available Gelbo Tester available from U.S. Testing, Inc., Hoboken, New Jersey, as follows: The Gelbo test is similar to that described in ASTM F392-74 (Standard Test Method for Flex Durability of Flexible Barrier Materials).

Test conditions are as follows:

Two (2) cycles at full flex

Speed is 60 cycles/minute

A sample of 8.0 inch x 11.5 inch (20.32 x 29.21 cm) is formed into a cylinder of 8.0 inch (20.32 cm) height, and clamped top and bottom into the machine. To create the flex the top cylindrical surface is rapidly rotated and driven toward the lower cylindrical surface for a rotation in excess of 360 degrees. This causes the material to twist into a rope-like form. The machine then quickly reverses itself to untwist and straighten the sample back into a cylindrical shape. This cycle defines one "flex" of the sample. By viewing the sample over a light box, any pinhole breach of the metallic foil can then be determined. When the metallic foil is micro-managed by the polyimide as previously described, the composite resists pinholing when severely flexed in the Gelbo tester. Test results indicated the composite could withstand two flexes with no pinholing, and additional flexes with only minor pinholing. This result was far superior to any other method of "protecting" the metallic barrier.

In another test, 1 mil polyimide clad with 0.5 mil fluoropolymer on each side was laminated to both sides of 1.3 mil primed aluminum foil. Several samples of this material were tested in the Gelbo flex tester and the following relationship was measured between number of flexes and number of pinholes observed in the sample:

| No. of Flexes | Number of Pinholes |
|:---:|:---:|
| 0 | 0 |
| 2 | 0 |
| 5 | 1 |
| 15 | 10 |
| 25 | 15* |

\*Includes 5 relatively large pinholes (approx. 1 mm diameter).

The Gelbo flex test of the polyester/foil composite revealed that the number of pinholes decreases with the decreasing thickness of the polyester film used:

| Gauge. in. | Number of Pinholes After 2 Flexes |
|---|---|
| 0.003 | 8 |
| 0.002 | 4 |
| 0.001 | 2 |
| 0.0005 | 1 |

As a further indication of the integrity of the micro-management of the foil by the fluoropolymer clad polyimide film product (said clad polyimide being bonded to each face of the foil) Instron tensile samples that had undergone considerable extension (30%-50%) with a width reduction of 20% showed no signs of delamination other than in the immediate vicinity of the break, and in fact showed no pinholing when viewed over a light box.

Referring to FIG. 3, the material is cut, formed and seamed using a hot seamer into a shape substantially to conform to the size and the shape of a rigid or semi-rigid tank shell 20. Alternatively, shell 20 may comprise a rigid plastic shell with vent holes to allow air to escape, or a mesh or other binding means for supporting the liner. Typically, the material will be cut, formed and seamed so that it is slightly oversized, e.g. 3 to 15%, depending on other factors such as size and geometry so that when the shaped product is installed and unrolled inside a rigid or semi-rigid tank shell, and the tank filled, any stress or tension will be taken not by the seams, but rather by the tank shell. The liner or bladder 30 is then folded and inserted into the existing tank 20 and affixed to the tank at the filler junction 24 of the tank 22.

Referring also to FIG. 4, an apertured reinforcing collar 26, formed, for example, of 0.005 inch (0.0127 cm) fluoropolymer clad glass substrate material, such as CHEMGLAS™ Premium 5 mil available from Chemfab Corp., typically is heat laminated around the inlet hole 28 of the liner 30, and the liner is bolted or clamped to the tank at 32. For fixed position storage tanks such as underground or above ground storage tanks the liner or bladder 30 may be supported and held in place by means of support hoops or stays 34 or the like. Thus, the liner 30 may be employed in new tank construction, or for retrofitting existing tanks.

Referring to FIGS. 5A-5C, in the case of installation of the liner into a tank of a motor vehicle or the like, the liner or bladder 40 typically is made sufficiently oversized relative to the size of the rigid or semi-rigid tank 42 so as to permit rapid expansion or elongation of the liner in order to accommodate a sudden rush of fuel, for example, in the case of rapid deceleration due to a collision. Thus, for example, the liner 40 may be made 10 to 15% oversized, and the liner 40 may be pleated or bunched at 44 to permit the rapid expansion and elongation of the liner without unduly stressing the liner. Since the liner 40 is quite thin, the bunched material does not appreciably reduce the capacity of the tank.

As noted supra, repetitive flexing of a foil clad laminate may result in damage to and pinholing of the foil. Accordingly, for on-board motor vehicle and the like use in which the tank may be subjected to several hundred fillings over the lifetime of the vehicle, it may be preferred to employ a non-foil laminate product formed of plastic materials selected for resistance to the intended fuel contents. The use of a non-foil laminate product, while perhaps not one hundred percent impervious to all of the liquid fuel volatiles, still should substantially reduce or essentially eliminate volatiles in the vapor volume over the liquid and thus substantially reduce or essentially eliminate venting of volatiles during filling.

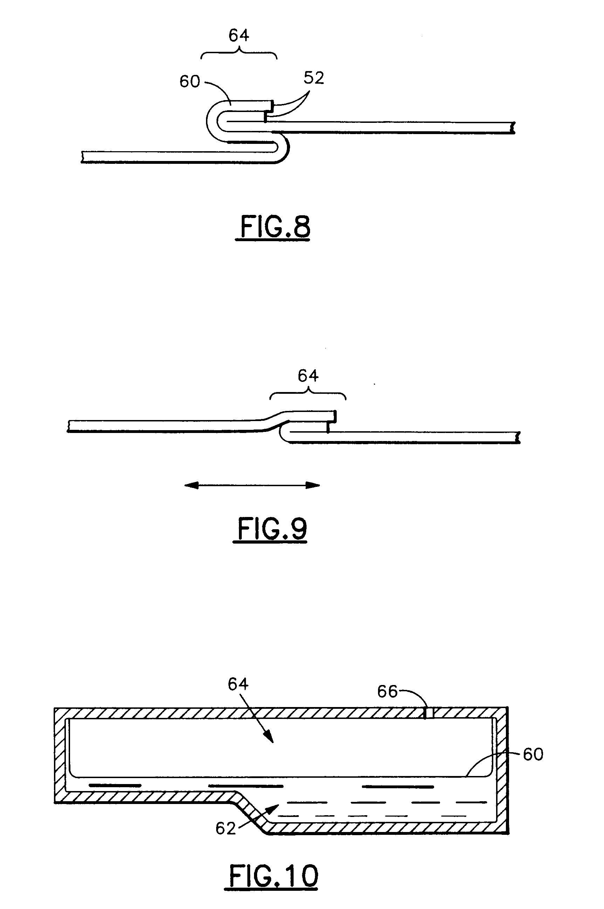

As is well known in the art, shear seams 50 (FIG. 6) provide the strongest seam in tensile and breaking strength. However, shear seams are not considered desirable in forming a fuel tank liner or bladder since a shear seam will permit exposure of the unprotected laminate edges 52 to the fuel. Exposure of the unprotected edges may permit liquid to migrate or permeate through the laminate at the exposed edges 52, and/or may cause deterioration of the laminate and/or corrosion of the metal foil. Peel seams 54 (FIG. 7) protect the edges 56 of the laminate against exposure to the fuel; however, peel seams are relatively weak in tensile and breaking strength. While a peel seam may be employed in the case of a fixed position fuel tank, a peel seam does not have sufficient strength to be employed in forming a tank liner or bladder for a motor vehicle.

Accordingly, and in accordance with yet another aspect of the present invention, we have devised a combination peel/shear seam which combined the advantages of, but none of the disadvantages of peel and shear seams by themselves. Referring in particular to FIG. 8, a combination peel/shear seam or splice is formed in accordance with the present invention by folding the edges of the laminate back on themselves, and sealing the folds at the overlap area 64, for example, by heat sealing. The resultant seam thus provides single face contact, i.e. as in the case of a peel seam, and the ultimate tensile and breaking strength of a shear seam. Thus, as shown in FIG. 9 when the seam is challenged, for example, by pressure of a rush of contained liquid, the seam holds until its seam strength is reached. The peel portion of the seam then releases, which in turn release a certain amount of energy and permits the volume of the liner or bladder to increase. Pressure then is applied to the shear portion of the seam for ultimate strength, and thus providing a further margin of safety.

Referring to FIG. 10, the polymer laminate materials made in accordance with the present invention also may advantageously be employed as flexible overhead air bags or barriers 60 positioned over the fuel tank liquid contents 62, for occupying the tank overhead 64 and thereby preventing evaporation of fuel vapors into the tank overhead 64. In such case, the tank should be provided with vent means 66 for permitting flow of air into and out of the overhead barrier as the barrier rises and falls with the fuel contents 62. Barrier (bag) 60 is positioned at the top of the tank and has sufficient extra material to allow the barrier to droop, under gravity, as the fuel level falls, or changes volume as a function of the pressure differential caused by removal of fuel or changes volume as a function of ambient temperature changes, essentially to maintain contact with the liquid fuel and prevent any fuel vapors from forming overhead where they may then escape to the atmosphere.

While the invention has been described in connection with a preferred embodiment in providing a tank liner or bladder for a fuel tank, it will be understood that the invention also may advantageously be used for the containment of both aqueous and non-aqueous chemicals. Also, different polymer materials and different adhesives may be employed for the several layers. For example, an aluminum foil may be laminated between a polyester outer film layer and a polyimide inner film layer. Also, the tank liner made in accordance with the present invention may comprise two or more separate bags, one inside the other, formed of the same or different laminate materials. For example, for use as a fuel tank liner, inner liner may comprise a laminate of fluoropolymer clad polyimide which is impervious to the hydrocarbon components of the fuel, while the outer liner may comprise a laminate of PET laminated to foil which is impervious to alcohols. The inner and outer liners may be laminated or mechanically fixed to one another adjacent their respective inlet holes to form a common inlet, but preferably are otherwise free of one another.

As has been delineated above, permeation resistant bladders cover two basically different applications and the invention described here covers both applications.

One group of applications involves from 100 to over 2000 fillings and requires lessening loss of fuel molecules both during service and during filling. These applications require a material which is flexible and conforms to the shape of the contained fuel. Onboard fuel containment applications would principally fall into this group. These applications typically may make use of laminate constructions without foil.

The other class of applications may involve a large number of fillings and require zero or extremely low permeation to a broad variety of fuel molecules. Underground storage tanks or other tanks which will require very long life and/or extremely low permeation rate will normally fall into this group. Such applications should normally benefit from foil laminates. Because metal foil is incorporated into the bladder, these applications typically may use stays or other methods to hold the bladder extended. This approach means that the only flexing of the bladder occurs during installation and limits the number of flexes.

Some applications may require an extremely low level of permeability, such as is offered by foil, but also require the high level of flexibility provided by a non-foil construction. Another element of this invention is a "bag-in-a-bag" concept where an outside bag of very high permeability resistance (preferably foil containing) encloses a flexible inside bag (preferably not foil containing). The outside bag would preferably fit inside of a tank or overpack to provide mechanical integrity.

**Claims**

1. A multi-layer laminated product of improved resistance to permeation characterized by comprising at least one gas-tight metallic foil 10 laminated to at least one fluoropolymer clad polyimide film (12,14).

2. A multi-layer laminated product according to claim 1, characterized in that said metallic foil 10 is sandwiched between and laminated to at least two polymer films (12,14), at least one of which polymer films comprises a fluoropolymer clad polyimide film.

3. A multi-layer laminated product according to claim 1, characterized in that said fluoropolymer clad polyimide film (12,14) preferably comprises a layer of polyimide and one or more layers of fluoropolymer selected from: (1) PTFE, thermally compatible TFE copolymers and a combination or blend thereof; (2) $PVF_2$, thermally compatible $VF_2$ copolymers and a combination or blend thereof; (3) PCTFE, thermally compatible CTFE copolymers and a combination or blend thereof; or (4) PTFE, thermally compatible TFE copolymers, blends thereof, $PVF_2$, thermally compatible $VF_2$ copolymers, blends thereof, PCTFE, thermally compatible CTFE copolymers and blends thereof.

4. A multi-layer laminated product according to claim 1, characterized in that said metallic foil is selected from aluminum, copper, tin, lead and a corrosion resistant steel alloy, preferably stainless steel, and wherein said metallic foil preferably has a thickness of 0.0013 to 0.0076 cm, preferably 0.00254 to 0.0038 cm.

5. A multi-layer laminated composite characterized by comprising the multi-layer laminated product of claim 1, and at least one fluoropolymer film, thermally welded to the multi-layer film, which fluoropolymer film comprises a fluoropolymer selected from PTFE, thermally compatible TFE copolymers, and a combination or blend thereof, and wherein at least one of the outermost surfaces of the fluoropolymer layer preferably comprises unfused PTFE.

6. A multi-layer laminated product according to claim 1, and characterized by including a conductive material, preferably carbon particles, metallic particles or mixtures thereof, incorporated into one or more of the adhesive layers.

7. A fluid storage system characterized by comprising a shell 42 and including a flexible, seamed liner 40 located within said shell, said liner being oversized relative to said shell so as to reduce stress or tension on liner seams 64.

8. A fluid storage system according to claim 7, characterized in that said liner preferably is 3-15% oversized, said liner preferably including at least two seamed liners located one within the other, the outer of the two seamed liners 40 preferably comprising a foil laminate, and wherein said shell 42 comprises a rigid or a semi-rigid shell, or a mesh or other apertured binding means for supporting the liner.

9. A fluid storage system according to claim 8, characterized in that said shell includes one or more apertures 24 for permitting flow of air into and out of said shell.

10. A fluid storage system characterized by comprising a fluid tight shell and including a flexible barrier 60 positioned over the storage tank contents 62 for occupying the tank overhead and thereby prevent evaporation of fluid contents into the tank overhead, said barrier being held in place adjacent the top of the shell, said barrier having sufficient material to allow the barrier to droop, under gravity, in accordance with changes in volume of the contained fluid, and including vent means 66 for permitting flow of air (a) into and out of the shell above the barrier as the barrier rises and falls with the fluid contents, or (b) into and out of said barrier.

11. A method of installing a liner in a storage tank characterized by providing a liner having a shape and size which is oversized relative to the tank and introducing and deploying the liner within the tank.

12. A method according to claim 11, characterized by including the step of maintaining the liner against the inside walls of the shell by means of hoops or stays.

13. A splice for joining distal edges of a flexible material, characterized in that the joining edges are folded back upon themselves in an overlap area 64 whereby the distal edges 52 of the material are disposed to one side of the splice.

14. A splice according to claim 13, characterized in that said material preferably comprises a meltable material whereby it may be heat laminated to itself in the overlap area, and wherein said material preferably comprises a gas-tight metallic foil laminated to a polymer film, preferably a fluoropolymer clad polyimide film, or said material preferably comprises a vinylidene chloride containing polymer, a urethane clad polymer film, a biaxially oriented condensation film, a biaxially oriented condensation polymer of polyethylene terephthalate and ethylene glycol, or a polymer film selected from polyamide, polyimide, polyetherimide, polyethylene naphthalate, polybenzimidazole, polybenzoxazole, polyethylene, polystyrene, a copolymer of ethylene and vinyl alcohol and vinylidene chloride.

FIG.1

FIG.2

FIG.3

FIG.4

FIG.5A

FIG.5B

FIG.5C

FIG.6

FIG.7

FIG.8

FIG.9

FIG.10

13